# EUROPÄISCHE PATENTSCHRIFT

(11) **EP 0 901 100 B1**
(45) Veröffentlichungstag und Bekanntmachung des Hinweises auf die Patenterteilung: **21.07.2004**
(21) Anmeldenummer: 98114125.2
(22) Anmeldetag: 29.07.1998
(51) Int. Cl.: G06K 19/06, G08B 13/24

(54) **Magnetisches Identifizierungselement**
Magnetic identification element
Elément magnetique d'identification

(30) Priorität: 27.08.1997 DE 19737342
(43) Veröffentlichungstag der Anmeldung: 10.03.1999
(73) Patentinhaber: Meto International GmbH, 69434 Hirschhorn/Neckar (DE)
(72) Erfinder: Rührig, Manfred, Dr., 69469 Weinheim (DE)
(74) Vertreter: Menges, Rolf, Dipl.-Ing.

(56) Entgegenhaltungen:
- EP-A- 0 354 759
- EP-A- 0 789 340
- WO-A-97/04338
- DE-A- 19 603 355
- US-A- 4 940 966

## Beschreibung

Die Erfindung betrifft ein Identifizierungselement, bestehend aus einer Lage eines anisotropen, durch eine Vorzugsachse ausgezeichneten magnetischen Materials hoher Permeabilität und geringer Koerzitivkraft (weichmagnetisches Material), das bei Anlegen eines äußeren magnetischen Wechselfeldes ein charakteristisches Signal erzeugt, wobei das Signal maximal ist, wenn die Vorzugsachse des Identifizierungselementes parallel zum äußeren magnetischen Wechselfeld ausgerichtet ist, und aus einer Lage eines magnetischen Materials geringer Permeabilität und hoher Koerzitivkraft (halbhart- oder hartmagnetisches Material), das auf dem weichmagnetischen Material oder in dessen unmittelbarer Nähe angeordnet ist, wobei das halbhart- oder hartmagnetische Material Bereiche mit unterschiedlicher Magnetisierung aufweist. Desweiteren betrifft die Erfindung ein Verfahren zur Herstellung eines derartigen Identifizierungselements.

Die elektronische Artikelsicherung zur Verhinderung von Inventurverlusten in Kaufhäusern und Lagern erfreut sich zunehmender Beliebtheit. Es sind bereits eine Vielzahl unterschiedlicher Sicherungselemente bekannt geworden. Eine besonders vorteilhafte Ausgestaltung eines Sicherungselements ist aus der EP 0 295 028 B1 bekannt geworden. In dieser Patentschrift sind die sog. Dünnschicht-Etiketten beschrieben. Diese bestehen aus einer dünnen, vorzugsweise im µm-Bereich liegenden Schicht aus weichmagnetischem Material. Die Schicht wird z.B. mittels eines physikalischen Abscheideverfahrens unter Vakuumbedingungen auf ein Trägersubstrat aufgebracht.
Dünnschicht-Etiketten zeigen einen anisotropen Aufbau. Anisotrop bedeutet, daß die weichmagnetische Schicht, aus der die Dünnschicht-Etiketten gebildet sind, eine Vorzugsachse besitzt. Der anisotrope Aufbau macht sich in der Praxis dadurch bemerkbar, daß das von dem Dünnschicht-Etikett als Antwort auf ein Abfragefeld remittierte charakteristische Signal maximal ist, wenn Abfragefeld und Vorzugsachse parallel zueinander ausgerichtet sind; das Signal verschwindet hingegen, wenn Vorzugsachse und Abfragefeld senkrecht zueinander stehen.

Ein analoges Verhalten zeigen übrigens auch die sog. Streifen-Sicherungselemente, die aus einem streifenförmigen, weichmagnetischen Material bestehen. Auch hier ist das charakteristische Signal maximal, wenn Abfragefeld und Streifen parallel zueinander ausgerichtet sind, und verschwindet bei senkrechter Ausrichtung. Übrigens kann das "Strip"-Sicherungselement auch aus einem gezogenen Draht bestehen.

Zur Detektierung von Sicherungselementen in einer Abfragezone sind eine Vielzahl unterschiedlicher Verfahren bekannt geworden. So wird in der EP 123 586 B vorgeschlagen, zusätzlich zu zwei Abfragefelder mit den Frequenzen f1 und f2 im kHz-Bereich ein Feld mit einer im Hz-Bereich liegenden Frequenz in die Abfragezone zu senden. Die beiden Abfragefelder mit den Frequenzen f1 und f2 regen ein in der Abfragezone befindliches Sicherungselement zur Aussendung eines charakteristischen Signals mit den Intermodulationsfrequenzen n•f1 ± m•f2 (n, m = 0, 1, 2,...) an. Das niederfrequente Abfragefeld bewirkt, daß das Sicherungselement im Takt dieses Feldes von der Sättigung in eine Richtung zur Sättigung in die andere Richtung getrieben wird. Das charakteristische Signal tritt daher periodisch mit der Frequenz des niederfrequenten Feldes auf.

Als alternative Lösung ist auch bekannt geworden, lediglich ein im kHz-Bereich liegendes Abfragefeld zur Erregung des Sicherungselementes zu verwenden, wobei das charakteristische Signal des Sicherungselementes wiederum im Takte eines niederfrequenten Feldes, das das weichmagnetische Material zwischen den beiden Sättigungen hin- und hertreibt, auftritt.

Aus der WO97/04338 ist es bekannt geworden, ein Sicherungselement derart auszugestalten, daß es neben der Funktion, einen Artikel gegen Diebstahl zu sichern, auch in der Lage ist, den entsprechend gesicherten Artikel zu identifizieren. Hierzu wird das halbhart- bzw. hartmagnetische Material mit einem ungleichförmigen Feldmuster magnetisiert. Infolge des Feldmusters des permanent magnetisierbaren Materials läßt sich das charakteristische Signal des weichmagnetischen Materials in gezielter Weise vielfältig variieren.

Ausgehend von diesem Stand der Technik liegt der Erfindung liegt die Aufgabe zugrunde, ein Identifizierungselement bzw. ein Verfahren zur Herstellung eines Identifizierungselements vorzuschlagen, welches kostengünstig ist.

Die Aufgabe wird bezüglich des Identifizierungselements dadurch gelöst, daß die Bereiche quer zur Vorzugsachse des weichmagnetischen Materials nebeneinander angeordnet sind, und daß in den Bereichen Abschnitte des halbhart- oder hartmagnetischen Materials auf Lücke zueinander angeordnet sind, wobei die Abschnitte in den einzelnen Bereichen in Richtung der Vorzugsachse des weichmagnetischen Materials eine unterschiedliche Länge aufweisen.

Gemäß einer vorteilhaften Ausgestaltung des erfindungsgemäßen Identifizierungselements ist vorgesehen, daß das halbhart- oder hartmagnetische Material in allen Bereichen die gleiche Vormagnetisierungsstärke aufweist. Diese Ausgestaltung ermöglicht die Benutzung eines Standardmaterials, ohne daß eine weitere Magnetisierung des Materials erforderlich wäre. Vorzugsweise befindet sich das halbhart- oder hartmagnetische Material in der Sättigung.

Bezüglich des Verfahrens zur Herstellung eines Identifizierungselement wird die Aufgabe dadurch gelöst, daß die Bereiche quer zur Vorzugsrichtung des weichmagnetischen Materials nebeneinander angeordnet werden und daß in den Bereichen Abschnitte des halbhart- oder hartmagnetischen Materials auf Lücke zueinander angeordnet werden, wobei die Abschnitte in den einzelnen Bereichen in Richtung der Vorzugsachse des weichmagnetischen Materials eine unterschiedliche Länge aufweisen.

Gemäß einer kostengünstigen Weiterbildung des erfindungsgemäßen Verfahrens wird das halbhart- oder hartmagnetische Material in Form einer durchgehenden Schicht bezüglich des weichmagnetischen Materials aufgebracht; dann wird das halbhart- oder hartmagnetische Material in den einzelnen Bereichen so entfernt, daß Abschnitte unterschiedlicher Länge in den einzelnen Bereichen entstehen; diese haben einen vorgegebenen Abstand voneinander. Vorteilhaft ist es hierbei, wenn das halbhart- oder hartmagnetische Material zwischen den Abschnitten auf mechanischem Wege (z.B. Auskratzen, Ausstanzen, usw.) entfernt wird. Alternativ kann das halbhart- oder hartmagnetische Material zwischen den Abschnitten mittels photo-chemischer Einwirkung entfernt werden.

Gemäß einer weiteren Ausgestaltung des erfindungsgemäßen Verfahrens ist vorgesehen, daß das halbhart- oder hartmagnetische Material in dem für den jeweiligen Bereich bestimmten durchbrochenen Muster aufgedruckt wird.

Die Erfindung wird anhand der nachfolgenden Figuren näher erläutert. Es zeigt:
Fig. 1a: ein Sicherungselement aus weichmagnetischem Material und eine schematische Darstellung seines charakteristischen Signals (Stand der Technik),
Fig. 1b: ein deaktivierbares Sicherungselement aus weichmagnetischem Material und eine schematische Darstellung seines charakteristischen Signals (Stand der Technik),
Fig. 1c: ein erfindungsgemäßes Sicherungselement und eine schematische Darstellung seines charakteristischen Signals,
Fig. 2a: ein Identifizierungselement und eine schematische Darstellung seines charakteristischen Signals (Stand der Technik),
Fig. 2b: eine Ausgestaltung des erfindungsgemäßen Identifizierungselements und eine schematische Darstellung seines charakteristischen Signals (Stand der Technik),
Fig. 3a: ein weiteres Identifizierungselement und eine schematische Darstellung seines charakteristischen Signals (Stand der Technik), und
Fig. 3b: ein weiteres erfindungsgemäßes Identifizierungselement und eine schematische Darstellung seines charakteristischen Signals.

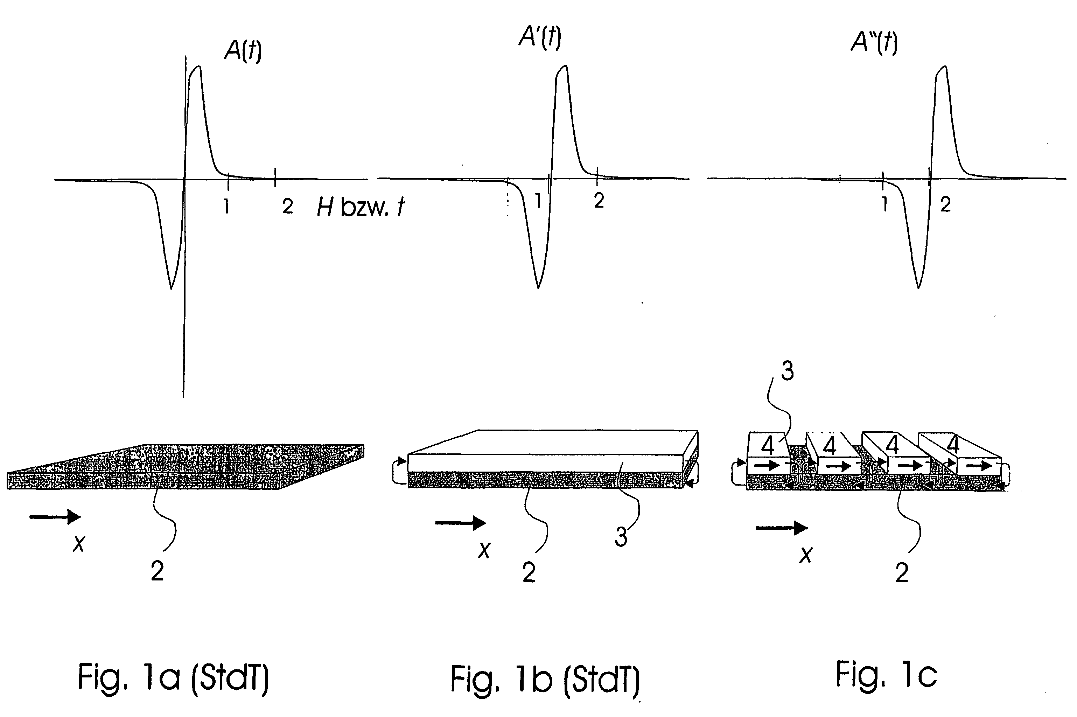

In Fig. 1a ist ein aus dem Stand der Technik bekannt gewordenes Sicherungselement aus weichmagnetischem Material 2 und eine schematische Darstellung seines charakteristischen Signals A(t) gezeigt. Das Diagramm gibt die Reaktion, d.h. die zeitliche Amplitudenänderung des weichmagnetischen Materials 2 auf ein äußeres magnetisches Wechselfeld wieder. Wie bereits erwähnt, wird das weichmagnetische Material 2 durch das Wechselfeld von der Sättigung in eine Richtung in die Sättigung in die andere Richtung getrieben. Die Peaks des charakteristischen Signals treten -bezogen auf die Hystereskurve- auf, wenn der lineare Bereich verlassen wird und das weichmagnetische Material 2 in der einen oder der anderen Richtung in die Sättigung übergeht. Infolge der Symmetrie der Hysteresekurve verläuft das charakteristische Signal A(t) aus Fig. 1a im wesentlichen symmetrisch zum Nullpunkt.

Wird auf das weichmagnetische Material 2 ein vormagnetisiertes, halbhart- oder hartmagnetisches Material 3 aufgebracht, führt dies - wie in Fig. 1b dargestellt - zu einer Verschiebung des charakteristischen Signals A(t) in Richtung der t-Achse. Dies bedeutet, daß eine Detektoreinrichung, die auf das in Fig. 1a gezeigte Signal A(t) abgestimmt ist, das verschobene Signal A'(t) nicht mehr erkennen kann. Dieser Effekt wird übrigens im Stand der Technik zur Deaktivierung weichmagnetischer Sicherungselemente ausgenutzt.

Die Verschiebung des charakteristischen Signals A''(t) läßt sich -wie aus Fig. 1c zu ersehen- in weitem Rahmen dadurch variieren, daß das halbhart- oder hartmagnetische Material 3 keine durchgehende Schicht bildet, sondern in Richtung der Vorzugsachse x des weichmagnetischen Materials 2 in einzelne Abschnitte 4 untergliedert ist, wobei die Länge (a) der Abschnitte 4 in Richtung der Vorzugsachse x die Verschiebung des charakteristischen Signals A''(t) auf der t-Achse bestimmt. Dieser Effekt wird, wie im folgenden noch näher zu erläutern ist, erfindungsgemäß ausgenutzt, um ein Sicherungelement als Identifizierungselement 1 auszugestalten.

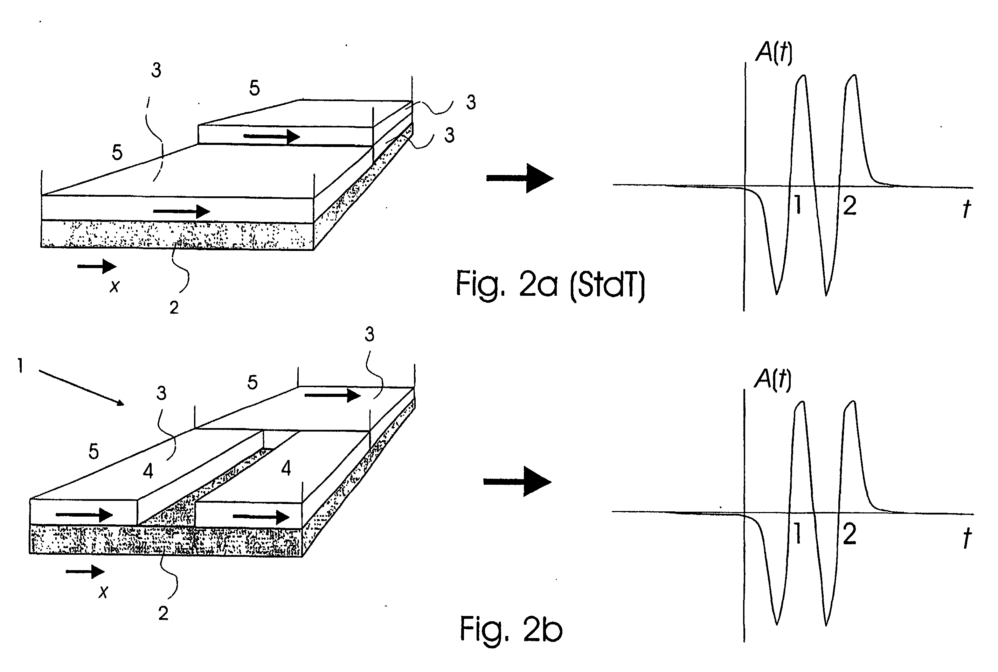

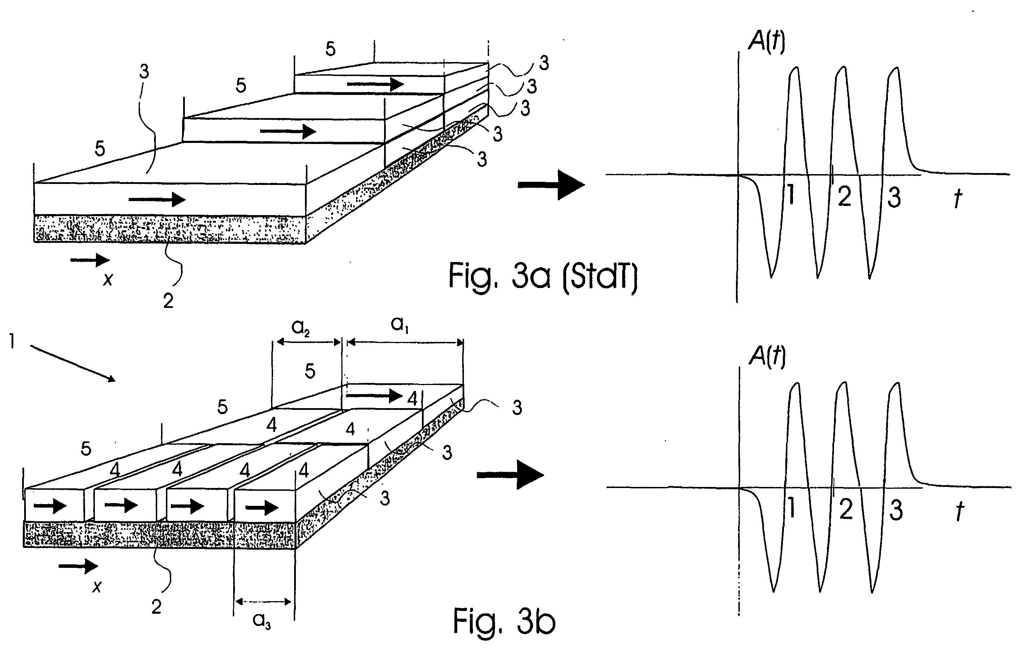

Aus der WO97/04338 ist bekannt geworden, das halbhart- bzw. hartmagnetische Material mit einem ungleichförmigen Feldmuster zu magnetisieren. Infolge des ungleichförmigen Feldmusters des permanent magnetisierbaren Materials 3 läßt sich das charakteristische Signal A(t) des weichmagnetischen Materials 2 in gezielter Weise vielfältig variieren. Infolge der unterschiedlichen Kennzeichnung wird ein mit einem entsprechenden Identifizierungselement 1 versehener Artikel von anderen unterscheidbar. Wie in Fig. 2a und Fig. 3a gezeigt, wird das Feldmuster in der WO97/04338 technisch dadurch erzielt, daß in unterschiedlichen Bereichen 4 verschiedene Dicken von halbhart- oder hartmagnetischem Material 3 aufgebracht werden oder daß die Bereiche 5 eine unterschiedliche Magnetisierungsstärke aufweisen. In der Regel hat halbhart- bzw. hartmagnetisches Material 3 eine vorgegebene Dicke. Insbesondere gilt dies für kommerziell erhältliches Aufzeichnungsbandmaterial. Um die Mehrkosten für Sonderanfertigungen einzusparen, ist es zur Erzielung größerer Schichtdicken nötig, mehrere Lagen von halbhart- oder hartmagnetischem Material 3 aufeinander anzuordnen. Hier zeigen sich klar die Nachteile der aus der WO97/04338 bekannt gewordenen Lösung: hoher Materialverbrauch und aufwendige Fertigung. Darüber hinaus ergibt sich ein weiteres Problem: für größere Schichtdicken sind die oberen Volumenanteile nicht mehr ausreichend zur Vormagnetisierung der darunterliegenden weichmagnetischen Schicht 2. Durch diese Art Sättigung werden die Variationsmöglichkeiten für Identifizierungselemente 1 natürlich erheblich beschränkt. Ein weiterer Nachteil der aus dem Stand der Technik bekannt gewordenen Lösung ist darin zu sehen, daß die auf die vorgeschlagene Art hergestellten Identifizierungselemente 1 einerseits relativ dick werden, andererseits auch unterschiedliche Dicken in verschiedenen Bereichen 5 aufweisen, was ihre Integration in Etiketten erheblich erschwert.
Ebenso ungünstig ist es, Materialien mit unterschiedlichen Magnetisierungsstärken in den einzelnen Bereichen anzuordnen, da auch diese Lösung die Kosten für die Identifizierungselemente 1 gravierend in die Höhe treibt.

Erfindungsgemäß werden diese Probleme umgangen - wie sich aus den Figuren Fig. 2b und Fig. 3b unschwer erkennen läßt. Fig. 2b zeigt ein erfindungsgemäßes Identifizierungselement 1 mit zwei Bereichen 5, während in Fig. 3b ein Identifizierungselement 1 mit drei unterschiedlichen Bereichen 5 dargestellt ist. Jeder der Bereiche 5 liefert seinen individuellen Betrag zum resultierenden charakteristischen Signal A(t) des Identifizierungselements 1. Die Bereiche 5 sind quer zu Richtung der Vorzugsachse x des weichmagnetischen Materials 2 angeordnet. In den einzelnen Bereichen 5 liegen Abschnitte 4 unterschiedlicher Länge a in Richtung der Vorzugsachse x. Während im oberen Bereich 5 das halbhart- oder hartmagnetische Material 3 jeweils das darunterliegende weichmagnetische Material 2 vollständig abdeckt, ist der untere Bereich 5 jeweils in vier Abschnitte 4 der Länge a unterteilt. Wie ein Vergleich der Fig. 2b und Fig. 3b zeigt, ergeben zwei Bereiche 5 mit unterschiedlich langen Abschnitten 4 (Fig. 2b) eine andere Signalform A(t) als drei Bereiche 5 mit unterschiedlich langen Abschnitten 4 (Fig. 3b).

## Patentansprüche

1. Identifizierungselement, bestehend aus einer Lage eines anisotropen, durch eine Vorzugsachse ausgezeichneten weichmagnetischen Materials hoher Permeabilität und geringer Koerzitivkraft, das bei Anlegen eines äußeren magnetischen Wechselfeldes ein charakteristisches Signal erzeugt, wobei das Signal maximal ist, wenn die Vorzugsachse des Identifierzierungselementes parallel zum äußeren magnetischen Wechselfeld ausgerichtet ist, und aus einer Lage eines halbhart- oder hart magnetischen Materials geringer Permeabilität und hoher Koerzitivkraft, das auf dem weichmagnetischen Material oder in dessen unmittelbarer Nähe angeordnet ist, wobei das halbhart- oder hartmagnetische Material Bereiche mit unterschiedlicher Magnetisierung aufweist,
**dadurch gekennzeichnet,**
**daß** die Bereiche (5) quer zur Vorzugsachse (x) des weichmagnetischen Materials (2) nebeneinander angeordnet sind, und
**daß** in den Bereichen (5) Abschnitte (4) des halbhart- oder hartmagnetischen Materials (3) auf Lücke zueinander angeordnet sind, wobei die Abschnitte (4) in den einzelnen Bereichen (5) in Richtung der Vorzugsachse (x) des weichmagnetischen Materials (2) eine unterschiedliche Länge (a) aufweisen.

2. Identifizierungselement nach Anspruch 1,
**dadurch gekennzeichnet,**
**daß** das halbhart- oder hartmagnetische Material (3) in allen Bereichen (5) im wesentlichen dieselbe Vormagnetisierungsstärke aufweist.

3. Verfahren zur Herstellung eines Identifizierungselements, bestehend aus einer Lage eines anisotropen, durch eine Vorzugsachse ausgezeichneten weich magnetischen Materials hoher Permeabilität und geringer Koerzitivkraft, das bei Anlegen eines äußeren magnetischen Wechselfeldes ein charakteristisches Signal erzeugt, wobei das Signal maximal ist, wenn die Vorzugsachse des Identifierzierungselementes parallel zum äußeren magnetischen Wechselfeld ausgerichtet ist, und aus einer Lage eines halbhart- oder hart magnetischen Materials geringer Permeabilität und hoher Koerzitivkraft, das auf dem weich-magnetischen Material oder in dessen unmittelbarer Nähe angeordnet ist, wobei das halbhart- oder hartmagnetische Material Bereiche mit unterschiedlicher Magnetisierung aufweist,
**dadurch gekennzeichnet,**
**daß** die Bereiche (5) quer zur Vorzugsachse (x) des weichmagnetischen Materials (2) nebeneinander angeordnet werden und,
**daß** in den Bereichen (5) Abschnitte (4) des halbhart- oder hartmagnetischen Materials (3) auf Lücke zueinander angeordnet werden, wobei die Abschnitte (4) in den einzelnen Bereichen (5) in Richtung der Vorzugsachse (x) des weichmagnetischen Materials (2) eine unterschiedliche Länge (a) aufweisen.

4. Verfahren nach Anspruch 3,
**dadurch gekennzeichnet,**
**daß** das halbhart- oder hartmagnetische Material (3) in Form einer durchgehenden Schicht bezüglich des weichmagnetischen Materials (2) aufgebracht wird und
**daß** das halbhart- oder hartmagnetische Material (3) zwischen den Abschnitten (4) entfernt wird.

5. Verfahren nach Anspruch 3 oder 4,
**dadurch gekennzeichnet,**
**daß** das halbhart- oder hartmagnetische Material (3) zwischen den Abschnitten (4) mittels photo-chemischer Einwirkung entfernt wird.

6. Verfahren nach Anspruch 3 oder 4,
**dadurch gekennzeichnet,**
**daß** das halbhart- oder hartmagnetische Material (3) zwischen den Abschnitten (4) auf mechanischem Wege entfernt wird.

7. Verfahren nach Anspruch 3,
**dadurch gekennzeichnet,**
**daß** das halbhart- oder hartmagnetische Material (3) in dem für den jeweiligen Bereich (5) bestimmten durchbrochenen Muster aufgedruckt wird.

## Claims

1. An identification element comprising a layer of an anisotropic soft magnetic material exhibiting a preferred axis, high permeability and low coercive force, which, when an external alternating magnetic field is applied, generates a characteristic signal which is at its maximum level when the preferred axis of the identification element is aligned parallel to the external alternating magnetic field, and further comprising a layer of a semi-hard or hard magnetic material of low permeability and high coercive force, which is arranged on the soft magnetic material or in the immediate proximity thereof, with the semi-hard or hard magnetic material having regions differing in magnetization,
**characterized in that** the regions (5) are in side-by-side arrangement in a direction transverse to the preferred axis (x) of the soft magnetic material (2), and that in said regions (5) sections (4) of the semi-hard or hard magnetic material (3) are arranged to have a gap therebetween, with the sections (4) in the individual regions (5) differing in length (a) in the direction of the preferred axis (x) of the soft magnetic material (2).

2. The identification element as claimed in claim 1,
**characterized in that** the magnitude of magnetic bias of the semi-hard or hard magnetic material (3) is essentially identical in all regions (5).

3. A method of manufacturing an identification element comprising a layer of an anisotropic soft magnetic material exhibiting a preferred axis, high permeability and low coercive force, which, when an external alternating magnetic field is applied, generates a characteristic signal which is at its maximum level when the preferred axis of the identification element is aligned parallel to the external alternating magnetic field, and further comprising a layer of a semi-hard or hard magnetic material of low permeability and high coercive force, which is arranged on the soft magnetic material or in the immediate proximity thereof, with the semi-hard or hard magnetic material having regions differing in magnetization,
**characterized by the steps of** arranging the regions (5) side-by-side in a direction transverse to the preferred axis (x) of the soft magnetic material (2), and arranging in said regions (5) sections (4) of the semi-hard or hard magnetic material (3) so as to provide a gap therebetween, with the sections (4) in the individual regions (5) differing in length (a) in the direction of the preferred axis (x) of the soft magnetic material (2).

4. The method as claimed in claim 3,
**characterized by the steps of** applying the semi-hard or hard magnetic material (3) to the soft magnetic material (2) in the form of a continuous layer, and removing the semi-hard or hard magnetic material (3) between the sections (4.

5. The method as claimed in claim 3 or 4,
**characterized by the step of** removing the semi-hard or hard magnetic material (3) between the sections (4) by means of photochemical action.

6. The method as claimed in claim 3 or 4,
**characterized by the step of** removing the semi-hard or hard magnetic material (3) between the sections (4) by mechanical means.

7. The method as claimed in claim 3,
**characterized by the step of** imprinting the semi-hard or hard magnetic material (3) in the gapped pattern intended for the particular region (5).

## Revendications

1. Elément d'identification, comprenant une couche constituée d'un matériau magnétique doux anisotrope repéré par un axe préférentiel, ayant une perméabilité élevée et une faible force coercitive, qui produit un signal caractéristique quand on applique un champ alternatif magnétique extérieur, en sorte que le signal est maximal quand l'axe préférentiel de l'élément d'identification est orienté parallèlement au champ alternatif magnétique extérieur, et une couche constituée d'un matériau magnétique semi-dur ou dur, ayant une faible perméabilité et une force coercitive élevée, qui est disposé sur le matériau magnétique doux ou à proximité immédiate de celui-ci, en sorte que le matériau magnétique semi-dur ou dur présente des zones avec une magnétisation différente,
**caractérisé en ce que** les zones (5) transversales par rapport à l'axe préférentiel (x) du matériau magnétique doux (2) sont disposées les unes à côté des autres, et **en ce que**, dans les zones (5), des sections (4) du matériau magnétique semi-dur ou dur (3) sont disposées avec un espace entre elles, en sorte que les sections (4) ont, dans les différentes zones (5), une longueur (a) différente en direction de l'axe préférentiel (x) du matériau magnétique doux (2).

2. Elément d'identification selon la revendication 1, **caractérisé en ce que** le matériau magnétique semi-dur ou dur (3) présente dans toutes les zones (5) sensiblement le même degré de polarisation.

3. Procédé de fabrication d'un élément d'identification, comprenant une couche constituée d'un matériau magnétique doux anisotrope repéré par un axe préférentiel, ayant une perméabilité élevée et une faible force coercitive, qui produit un signal caractéristique quand on applique un champ alternatif magnétique extérieur, en sorte que le signal est maximum quand l'axe préférentiel de l'élément d'identification est orienté parallèlement au champ alternatif magnétique extérieur, et une couche constituée d'un matériau magnétique semi-dur ou dur ayant une faible perméabilité et une force coercitive élevée, qui est disposé sur le matériau magnétique doux ou à proximité immédiate de celui-ci, en sorte que le matériau magnétique dur ou semi-dur présente des zones avec une magnétisation différente,
**caractérisé en ce que** les zones (5) transversales par rapport à l'axe préférentiel (x) du matériau magnétique doux (2) sont disposées les unes à côté des autres et **en ce que**, dans les zones (5), des sections (4) du matériau magnétique semi-dur ou dur (3) sont disposées avec un espace entre elles, en sorte que les sections (4), dans les différentes zones (5), ont une longueur (a) différente dans la direction de l'axe préférentiel (x) du matériau magnétique doux (2).

4. Procédé selon la revendication 3, **caractérisé en ce que** le matériau magnétique semi-dur ou dur (3) est appliqué sous la forme d'une bande continue par rapport au matériau magnétique doux (2), et **en ce que** le matériau magnétique semi-dur ou dur (3) est enlevé entre les sections (4).

5. Procédé selon la revendication 3 ou 4, **caractérisé en ce que** le matériau magnétique semi-dur ou dur (3) est enlevé entre les sections (4) par voie photochimique.

6. Procédé selon la revendication 3 ou 4, **caractérisé en ce que** le matériau magnétique semi-dur ou dur (3) est enlevé entre les sections (4) par voie mécanique.

7. Procédé selon la revendication 3, **caractérisé en ce que** le matériau magnétique semi-dur ou dur (3) est engagé par pression dans le motif perforé défini pour la zone respective (5).
